# EUROPEAN PATENT SPECIFICATION

(11) **EP 2 065 220 B1**
(45) Date of publication and mention of the grant of the patent: **19.01.2011**
(21) Application number: 08169846.6
(22) Date of filing: 25.11.2008
(51) Int. Cl.: B60C 1/00, C08L 21/00, C09J 109/06

(54) **Pneumatic tire**
Luftreifen
Pneu

(30) Priority: 30.11.2007 US 991250 P
(43) Date of publication of application: 03.06.2009
(73) Proprietor: The Goodyear Tire & Rubber Company, Akron, OH 44316-0001 (US)
(72) Inventor: Mruk, Ralf, L-7740, Colmar-Berg (LU)
(74) Representative: Kutsch, Bernd

(56) References cited:
- EP-A- 0 798 356
- EP-A- 1 371 680
- EP-A- 1 491 365
- GB-A- 1 088 580
- US-A- 3 476 642
- US-A- 3 547 764
- US-A- 4 031 288
- US-A- 4 187 349

## Description

### Background

Adhesion between vulcanized rubber and textile reinforcement in tires is often times inadequate. Various adhesive treatments have been used to promote adhesion between the rubber and textile, but increasing performance standards and conditions require improved adhesion.

It would be desirable, therefore, to have tires that have textile reinforcement treated in such a way as to exhibit improved adhesion to rubber.

US-A- 3,547,764 describes a pneumatic tire comprising a textile cord which has been impregnated with a composition comprising a vinylpyridine/butadiene rubber latex, a resorcinol/formaldehyde resin solution and polyvinylpyrrolidone. A process for improving the adhesion of synthetic materials to elastomers using such materials and its use in tire manufacturing is also known from GB-A-1,088,586.

### Summary

The present invention is directed to a pneumatic tire according to claim 1, a RFL adhesive according to claim 12 and a textile cord according to claim 15.

Dependent claims refer to preferred embodiments of the invention.

### Description

Conventionally, the carcass ply component of a tire is a cord-reinforced element of the tire carcass. Often two or more carcass ply components are used in a tire carcass. The carcass ply component itself is conventionally a multiple cord-reinforced component where the cords are embedded in a rubber composition which is usually referred to as a ply coat. The ply coat rubber composition is conventionally applied by calendering the rubber onto the multiplicity of cords as they pass over, around and through relatively large, heated, rotating, metal cylindrical rolls. Such carcass ply component of a tire, as well as the calendering method of applying the rubber composition ply coat, are well known to those having skill in such art. The same applies for the tire belt layers, also formed of textile cords and treated the same way as the carcass layers. Other components in the tire casing that may include a textile cord include cap ply, bead inserts and runflat sidewall inserts.

In practice, cords of various compositions and constructions may be used for the carcass ply or belts, including but not limited to polyester, rayon, aramid and nylon. Such cords and their construction, whether monofilament or as twisted filaments, are well known to those having skill in such art. The cords may be in the form of single end, (unwoven) cords or woven into fabric. Cords may be of a single material or a hybrid of two or more materials, for example, an aramid yarn wrapped around a polyester or nylon yarn center.

It has now been found that treatment of a textile cord with an RFL comprising polyvinylpyrollidone provides for improved adhesion between the textile cord and adjacent rubber in a tire.

In one embodiment, along with the polyvinylpyrrolidone, the RFL may include a resorcinol formaldehyde resin, a styrene-butadiene copolymer latex, a vinylpyridine-styrene-butadiene terpolymer latex, and a blocked isocyanate.

In one embodiment, the textile cord may be initially treated with an aqueous emulsion comprising a polyepoxide, followed by the RFL treatment.

The textile cord may be made from any fiber suitable for use in a tire as is known in the art. In one embodiment, the textile cord may be polyester or aramid. As an example of how such cords are produced, polyester yarns for cord are typically produced as multifilament bundles by extrusion of the filaments from a polymer melt. Polyester cord is produced by drawing polyester fiber into yarns comprising a plurality of the fibers, followed by twisting a plurality of these yarns into a cord. Such yarns may be treated with a spin-finish to protect the filaments from fretting against each other and against machine equipment to ensure good mechanical properties. In some cases the yarn may be top-coated with a so-called adhesion activator prior to twisting the yarn into cord. The adhesion activator, typically comprising a polyepoxide, serves to improve adhesion of the polyester cord to rubber compounds after it is dipped with an RFL dip. Such dip systems are not robust against long and high temperature cures in compounds that contain traces of humidity and amines which attack in particular polyester cord filament skin and degrade the adhesive / cord interface. The typical sign of failure is a nude polyester cord showing only traces of adhesive left on it.

In a treatment step, the textile cord is dipped in an RFL liquid. In one embodiment, the RFL adhesive composition comprises (1) resorcinol, (2) formaldehyde, (3) a styrene-butadiene rubber latex, (4) a vinylpyridine-styrene-butadiene terpolymer latex, (5) a blocked isocyanate, and (6) polyvinylpyrrolidone. The resorcinol reacts with formaldehyde to produce a resorcinol-formaldehyde reaction product. This reaction product is the result of a condensation reaction between a phenol group on the resorcinol and the aldehyde group on the formaldehyde. Resorcinol resoles and resorcinol-phenol resoles, whether formed in situ within the latex or formed separately in aqueous solution, are considerably superior to other condensation products in the adhesive mixture.

The resorcinol may be dissolved in water to which around 37 percent formaldehyde has been added together with a strong base such as sodium hydroxide. The strong base should generally constitute around 7.5 percent or less of the resorcinol, and the molar ratio of the formaldehyde to resorcinol should be in a range of from 1.5 to 2. The aqueous solution of the resole or condensation product or resin is mixed with the styrene-butadiene latex and vinylpyridine-styrene-butadiene terpolymer latex. The resole or other mentioned condensation product or materials that form said condensation product should constitute from 5 to 40 parts and preferably around 10 to 28 parts by solids of the latex mixture. The condensation product forming the resole or resole type resin forming materials should preferably be partially reacted or reacted so as to be only partially soluble in water. Sufficient water is then preferably added to give 12 percent to 28 percent by weight overall solids in the final dip. The weight ratio of the polymeric solids from the latex to the resorcinol/formaldehyde resin should be in a range of 2 to 6.

The RFL adhesive may include a blocked isocyanate. In one embodiment from 1 to 8 parts by weight of solids of blocked isocyanate is added to the adhesive. The blocked isocyanate may be any suitable blocked isocyanate known to be used in RFL adhesive dips including, but not limited to, caprolactam blocked methylene-bis-(4-phenylisocyanate), such as Grilbond-IL6 available from EMS American Grilon, Inc., and phenol formaldehyde blocked isocyanates as disclosed in US-A-3,226,276; US-A- 3,268,467; and US-A- 3,298,984. As a blocked isocyanate, use may be made of reaction products between one or more isocyanates and one or more kinds of isocyanate blocking agents. The isocyanates include monoisocyanates such as phenyl isocyanate, dichlorophenyl isocyanate and naphthalene monoisocyanate, diisocyanate such as tolylene diisocyanate, dianisidine diisocyanate, hexamethylene diisocyanate, m-phenylene diisocyanate, tetramethylene diisocyante, alkylbenzene diisocyanate, m-xylene diisocyanate, cyclohexylmethane diisocyanate, 3,3-dimethoxyphenylmethane-4,4'-diisocyanate, 1-alkoxybenzene-2,4-diisocyanate, ethylene diisocyanate, propylene diisocyanate, cyclohexylene-1,2-diisocyanate, diphenylene diisocyanate, butylene-1,2-diisocyanate, diphenylmethane-4,4-diisocyanate, diphenylethane diisocyanate, 1,5-naphthalene diisocyanate, etc., and triisocyanates such as triphenylmethane triisocyanate, diphenylmethane triisocyanate, etc. The isocyanate-blocking agents include phenols such as phenol, cresol, and resorcinol, tertiary alcohols such as t-butanol and t-pentanol, aromatic amines such as diphenylamine, diphenylnaphthylamine and xylidine, ethyleneimines such as ethylene imine and propyleneimine, imides such as succinic acid imide, and phthalimide, lactams such as ε.-caprolactam, δ-valerolactam, and butyrolactam, ureas such as urea and diethylene urea, oximes such as acetoxime, cyclohexanoxime, benzophenon oxime, and α-pyrolidon.

The RFL adhesive includes polyvinylpyrollidone and at least one other elastomer. In one embodiment, the polyvinylpyrollidone is added to the RFL such that the polyvinylpyrollidone makes up from 0.4 to 4 percent by weight of the total elastomers in the RFL liquid. In another embodiment, the polyvinylpyrollidone makes up from 0.7 to 2.5 percent by weight of the total elastomers in the RFL liquid. In one embodiment, the at least one other elastomer may be styrene-butadiene copolymer rubber, vinylpyridine-styrene-butadiene terpolymer. Thus, in an embodiment the RFL liquid includes as elastomers styrene-butadiene copolymer rubber, vinylpyridine-styrene-butadiene terpolymer, and polyvinylpyrollidone.

Suitable polyvinylpyrrollidone is available as Luvitec® K from BASF.

The elastomers may be added in the form of a latex or otherwise. In one embodiment, the polyvinylpyrrolidone is added to the RFL adhesive as a solution in water. In one embodiment, a vinylpyridine-styrene-butadiene terpolymer latex and styrene-butadiene rubber latex may be added to the RFL adhesive. The vinylpyridine-styrene-butadiene terpolymer may be present in the RFL adhesive such that the solids weight of the vinylpyridine-styrene-butadiene terpolymer is from 50 percent to 100 percent of the solids weight of the styrene-butadiene rubber; in other words, the weight ratio of vinylpyridine-styrene-butadiene terpolymer to styrene-butadiene rubber is from 1 to 2.

It is normally preferable to first prepare the latex of elastomers other than the polyvinylpyrrolidone and then add the partially condensed condensation product. However, the ingredients (the resorcinol and formaldehyde) can be added to the polymer latex in the uncondensed form and the entire condensation can then take place in situ. The latex tends to keep longer and be more stable if it is kept at an alkaline pH level.

After aging of the combined latex and condensation product, the polyvinylpyrrolidone is added. Addition of the polyvinylpyrrolidone to the combined latex/condensation product after aging is necessary to avoid precipitation of the solids. In one embodiment, the textile cord is treated with polyepoxide after the polyester yarns are twisted into cords and before treatment with the RFL. The twisted cords are dipped in an aqueous dispersion of a polyepoxide, also referred to herein as an epoxy or epoxy compound. The textile cord may be formed from yarns that have been treated with sizing or adhesives prior to twist. Thus, cords made using conventional adhesive activated yarns, i.e., yarns treated with adhesive prior to twist, may be subsequently treated using the current methods.

As a polyepoxide, use may be made of reaction products between an aliphatic polyalcohol such as glycerine, propylene glycol, ethylene glycol, hexane triol, sorbitol, trimethylol propane, 3-methylpentanetriol, poly(ethylene glycol), poly(propylene glycol) etc. and a halohydrine such as epichlorohydrin, reaction products between an aromatic polyalcohol such as resorcinol, phenol, hydroquinoline, phloroglucinol bis(4-hydroxyphenyl)methane and a halohydrin, reaction products between a novolac type phenolic resin such as a novolac type phenolic resin, or a novolac type resorcinol resin and halohydrin. In one embodiment, the polyepoxide is derived from an ortho-cresol formaldehyde novolac resin.

The polyepoxide is used as an aqueous dispersion of a fine particle polyepoxide. In one embodiment, the polyepoxide is present in the aqueous dispersion in a concentration range of from 1 to 5 percent by weight. In another embodiment, the polyepoxide is present in the aqueous dispersion in a concentration range of from 1 to 3 percent by weight.

In one embodiment, before the treatment with the RFL, dry textile cord is dipped in an aqueous polyepoxide dispersion. The cord is dipped for a time sufficient to allow a dip pick up, or DPU, of between 0.3 and 0.7 percent by weight of polyepoxide. In another embodiment, the DPU is between 0.4 and 0.6 percent by weight. The DPU is defined as the dipped cord weight (after drying or curing of the dipped cord) minus the undipped cord weight, then divided by the undipped cord weight.

The textile cord may be treated in the aqueous polyepoxide dispersion in a continuous process by drawing the cord through a dispersion bath, or by soaking the cord in batch. After dipping in the polyepoxide dispersion, the cord is dried or cured to remove the excess water, using methods as are known in the art.

In one embodiment, cord is dipped for about one to about three seconds in the RFL dip and dried at a temperature within the range of 120°C to 265°C for 0.5 minutes to 4 minutes and thereafter calendered into the rubber and cured therewith. The drying step utilized will preferably be carried out by passing the cord through 2 or more drying ovens which are maintained at progressively higher temperatures. For instance, it is highly preferred to dry the cord by passing it through a first drying oven which is maintained at a temperature of 250°F (121°C) to 300°F (149°C) and then to pass it through a second oven which is maintained at a temperature which is within the range of 350°F (177°C) to 500°F (260°C). It should be appreciated that these temperatures are oven temperatures rather than the temperature of the cord being dried. The cord will preferably have a total residence time in the drying ovens which is within the range of 1 minute to 5 minutes. For example, a residence time of 30 seconds to 90 seconds in the first oven and 30 seconds to 90 seconds in the second oven could be employed.

The solids content of the RFL dip used depends on the form of the textile being dipped. For example, for a single-end dip of an unwoven cord, a lower solids dip may be used. For a woven fabric of cords, a higher solids dip may be used. Additionally, the amount of solids on the dipped textile may be increased or decreased by using a single or double pass though the RFL dip, as required.

After treatment of the textile cord in the RFL, or initially in the polyepoxide followed by the RFL, the treated cord is incorporated into a ply layer with a rubber ply coat compound.

It is recognized that conventional compounding ingredients may be used in the preparation of the ply coat rubber composition. The ply coat, in the finished tire is sulfur cured as a component of the tire. For example, the sulfur cured ply coat rubber composition may contain conventional additives including reinforcing agents, fillers, peptizing agents, pigments, stearic acid, accelerators, sulfur-vulcanizing agents, antiozonants, antioxidants, processing oils, activators, initiators, plasticizers, waxes, pre-vulcanization inhibitors, extender oils and the like. Representative of conventional accelerators may be, for example, amines, guanidines, thioureas, thiols, thiurams, sulfenamides, dithiocarbamates and xanthates which are typically added in amounts of from 0.2 to 3 phr. Representative of sulfur-vulcanizing agents include element sulfur (free sulfur) or sulfur donating vulcanizing agents, for example, an amine disulfide, polymeric polysulfide or sulfur olefin adducts. The amount of sulfur-vulcanizing agent will vary depending on the type of rubber and particular type of sulfur-vulcanizing agent but generally range from 0.1 phr to 3 phr. Representative of the antidegradants which may be in the rubber composition include monophenols, bisphenols, thiobisphenols, polyphenols, hydroquinone derivatives, phosphites, phosphate blends, thioesters, naphthylamines, diphenol amines as well as other diaryl amine derivatives, para-phenylene diamines, quinolines and blended amines. Antidegradants are generally used in an amount ranging from 0.1 phr to 10 phr. Amine-based antidegradants, however, are not preferred and preferably not used in the practice of this invention. Representative of a peptizing agent that may be used is pentachlorophenol which may be used in an amount ranging from 0.1 phr to 0.4 phr with a range of from 0.2 to 0.3 phr being preferred. Representative of processing oils which may be used in the rubber composition of the present invention include, for example, aliphatic, naphthenic and aromatic oils. The processing oils may be used in a conventional amount ranging from 0 to 30 phr with a range of from 5 to 15 phr being more usually preferred. Initiators are generally used in a conventional amount ranging from 1 to 4 phr with a range of from 2 to 3 phr being preferred.

Accelerators may be used in a conventional amount. In cases where only a primary accelerator is used, the amounts range from 0.5 to 2 phr. In cases where combinations of two or more accelerators are used, the primary accelerator is generally used in amounts ranging from 0.5 to 1.5 phr and a secondary accelerator is used in amounts ranging from 0.1 to 0.5 phr. Suitable types of conventional accelerators are amines, disulfides, guanidines, thioureas, thiazoles, thiurams, sulfenamides, dithiocarbamates and xanthates. Preferably, the primary accelerator is a sulfenamide. If a secondary accelerator is used, it is preferably a guanidine, dithiocarbamate or thiuram compound.

Pneumatic tires are conventionally comprised of a generally toroidal shaped casing with an outer circumferential tread adapted to the ground contacting space beads and sidewalls extending radially from and connecting said tread to said beads. The tread may be built, shaped, molded and cured by various methods which will be readily apparent to those skilled in the art.

The invention is further illustrated by the following examples.

### EXAMPLE 1

This example illustrates the effect of the cord treatment of the present invention on the adhesion of aramid cord to standard rubber compounds. Single-end aramid cords were treated with an aqueous dispersion of a 1 percent by weight of fine particle ortho-cresol formaldehyde novolac polyepoxide resin by dipping the cord, followed by a two-step drying. The cords were then treated with a single pass through an RFL dip containing an SBR latex, a vinylpyridine-styrene-butadiene latex, and a blocked isocyanate, carbon black, and a variable amount of polyvinylpyrollidone (PVP) by dipping the cord followed by a two-step drying. The total solids content of the RFL dip was maintained approximately constant at 15 percent by weight of solids, with the amounts of all solids remaining the same except for the addition of the small amount of polyvinylpyrollidone. Dip pick-up on the cord was measured using an NMR method.

Dipped aramid cord samples were tested for adhesion to a standard rubber compounds containing standard amounts of additives and curatives. A 1670/3 6.9/6.9 (linear density in dtex, twist in tpi) aramid greige cord made from Teijin Twaron yarn each was treated as described.

Adhesion test samples were prepared by a standard peel adhesion test on 1" wide specimens. Strip adhesion samples were made by plying up a layer of single end dipped cord with both sides coated with 0.30 mm rubber coat compound to make a rubberized single end dipped cord composite, followed by preparation of a sandwich of two layers of the rubberized single end dipped cord composite separated by a mylar window sheet. The sandwich was cured and 1" samples cut centered on each window in the mylar. The cured samples were then tested for adhesion between the rubberized cord in the area defined by the mylar window by 180 degree pull on a test apparatus. Percent rubber coverage on cord was determined by visual comparison. Parallel samples were cured using the indicated cure cycles. Cured samples were then tested for adhesion at the indicated test conditions. Results of the adhesion tests are shown in Table 1 for adhesion to two standard rubber compounds.

**Table 1**

| Adhesion to Rubber Compounds, cured 20 minutes at 150ºC 1" Strip Adhesion Values, N | | | | |
|---|---|---|---|---|
| Sample No. | Control | | | |
| | 1 | 2 | 3 | 4 |
| PVP, wt% in RFL¹ | 0 | 0.07 | 0.14 | 0.21 |
| PVP, wt% of elastomers² | 0 | 0.78 | 1.54 | 2.29 |
| Dip Pick-Up | 5.3 | 5.9 | 7.1 | 6.4 |

| ***Rubber Compound 1*** | | | | |
|---|---|---|---|---|
| Test at 23ºC | | | | |
| Strip Adhesion, N | 215 | 240 | 251 | 247 |
| Rubber Coverage, % | 40 | 50 | 60 | 60 |
| Test at 100ºC | | | | |
| Strip Adhesion, N | 174 | 194 | 182 | 184 |
| Rubber Coverage, % | 50 | 60 | 50 | 50 |

| ***Rubber Compound 2*** | | | | |
|---|---|---|---|---|
| Test at 23ºC | | | | |
| Strip Adhesion, N | 154 | 164 | 165 | 160 |
| Rubber Coverage, % | 70 | 80 | 90 | 80 |
| Test at 100ºC | | | | |
| Strip Adhesion, N | 112 | 112 | 118 | 113 |
| Rubber Coverage, % | 70 | 70 | 90 | 70 |

| | | | | |
|---|---|---|---|---|
| ¹ weight percent of polyvinylpyrrolidone in RFL dip ² weight percent of polyvinylpyrrolidone in total of polyvinylpyrrolidone, styrene-butadiene, and vinylpyridine-styrene-butadiene elastomer solids | | | | |

As can be seen from the adhesion data in Table 1, the use of a relatively small amount of polyvinylpyrollidone as part of the total elastomer loading in the RFL dip leads to unexpectedly higher adhesion values than for the control.

### EXAMPLE 2

This example illustrates the effect of the cord treatment of the present invention on the adhesion of hybrid cord composed of aramid and nylon-6,6 yarn to standard rubber compounds. Single-end hybrid cords were treated with an aqueous dispersion of a 1 percent by weight of fine particle ortho-cresol formaldehyde novolac polyepoxide resin by dipping the cord, followed by a two-step drying. The cords were then treated with a single pass through an RFL dip containing an SBR latex, a vinylpyridine-styrene-butadiene latex, and a blocked isocyanate, carbon black, and either no additional polyvinylpyrollidone (PVP) or 0.14 weight % of polyvinylpyrollidone (PVP) with respect to the overall weight of the adhesive by dipping the cord followed by a two-step drying. The total solids content of the RFL dip was maintained approximately constant at 15 percent by weight of solids, with the amounts of all solids remaining the same except for the addition of the small amount of polyvinylpyrollidone.

Dipped hybrid cord samples were tested for adhesion to a standard rubber compounds containing standard amounts of additives and curatives. A hybrid greige cord with the construction 1100/2+940 10Z/3S/5S (linear density in dtex, twist in tpi) each was treated as described. For definition of hybrid constructions see US-A- 6,799,618.

Adhesion test samples were prepared as described in Example 1. Results of the adhesion tests are shown in Table 2 for adhesion to two standard rubber compounds.

**Table 2**

| Adhesion to Rubber Compounds, cured 20 minutes at 150ºC 1" Strip Adhesion Values, N | | |
|---|---|---|
| Sample No. | Control | |
| | 1 | 2 |
| PVP, wt% in RFL¹ | 0 | 0.14 |
| PVP, wt% of elastomers² | 0 | 1.54 |

| ***Rubber Compound 1*** | | |
|---|---|---|
| Test at 23ºC | | |
| Strip Adhesion, N | 218 | 226 |
| Rubber Coverage, % | 60 | 70 |
| Test at 100ºC | | |
| Strip Adhesion, N | 149 | 160 |
| Rubber Coverage, % | 80 | 80 |

| ***Rubber Compound 2*** | | |
|---|---|---|
| Test at 23ºC | | |
| Strip Adhesion, N | 138 | 168 |
| Rubber Coverage, % | 80 | 80 |
| Test at 100ºC | | |
| Strip Adhesion, N | 107 | 131 |
| Rubber Coverage, % | 80 | 90 |

| | | |
|---|---|---|
| ¹ weight percent of polyvinylpyrrolidone in RFL dip ² weight percent of polyvinylpyrrolidone in total of polyvinylpyrrolidone, styrene-butadiene, and vinylpyridine-styrene-butadiene elastomer solids | | |

As can be seen from the adhesion data in Tables 1 and 2, the use of a relatively small amount of polyvinylpyrollidone as part of the total elastomer loading in the RFL dip leads to unexpectedly higher adhesion values than for the control.

## Claims

1. A pneumatic tire comprising at least one component, the at least one component comprising a rubber composition contacting one or more reinforcing textile cords, the textile cords comprising a resorcinol-formaldehyde-latex (RFL) adhesive disposed on the surface of the textile cords, wherein the RFL adhesive comprises at least one other elastomer and from 0.4 to 4 weight percent of polyvinylpyrrolidone based on the total weight of the elastomers in the RFL adhesive.

2. The tire of claim 1 wherein the RFL adhesive comprises from 0.7 to 2.5 weight percent of polyvinylpyrrolidone based on the total weight of the elastomers in the RFL adhesive.

3. The tire of claim 1 or 2 wherein the at least one other elastomer is selected from the group consisting of styrene-butadiene copolymer and vinylpyridine-styrene-butadiene terpolymer.

4. The tire of at least one of the previous claims wherein the RFL adhesive further comprises a resorcinol-formaldehyde resin, a styrene-butadiene copolymer, a vinylpyridine-styrene-butadiene terpolymer, and a blocked isocyanate.

5. The tire of at least one of the previous claims wherein the textile cords further comprise a polyepoxide disposed on the surface of the textile cords.

6. The tire of at least one of the previous claims wherein the textile cords are selected from the group consisting of polyester cords, aramid cords, nylon cords, and hybrid aramid/nylon cords.

7. The tire of claim 6 wherein the textile cords are polyester cords.

8. The tire of claim 6 wherein the textile cords are aramid cords.

9. The tire of claim 6 wherein the textile cords are hybrid cords comprising aramid yarns wrapped around nylon yarns.

10. The tire of claim 6 wherein the textile cords are nylon cords.

11. The tire of at least one of the previous claims wherein the at least one component is selected from the group consisting of carcass plies, cap plies, bead inserts, and sidewall inserts.

12. A resorcinol-formaldelyde-latex (RFL) adhesive comprising at least one other elastomer and from 0.4 to 4 weight percent of polyvinylpyrrolidone based on the total weight of the elastomers in the RFL adhesive.

13. The resorcinol-formaldelyde-latex (RFL) adhesive of claim 12 comprising from from 0.7 to 2.5 weight percent of polyvinylpyrrolidone, based on the total weight of the elastomer in the RFL adhesive.

14. The RFL adhesive of claim 12 or 13 wherein the at least one other elastomer is selected from the group consisting of styrene-butadiene copolymer and vinylpyridine-styrene-butadiene terpolymer.

15. A textile cord comprising a RFL adhesive according to one of the claims 12-14 disposed on the surface of the textile cords.

## Patentansprüche

1. Luftreifen, umfassend mindestens ein Bauteil, wobei das mindestens eine Bauteil eine Kautschukzusammensetzung umfasst, die mit einem oder mehreren Textil-Verstärkungskorden in Kontakt ist, wobei die Textilkorde einen an der Oberfläche der Textilkorde angebrachten Resorcinol-Formaldehyd-Latex (RFL)-Klebstoff umfassen, wobei der RFL-Klebstoff mindestens ein anderes Elastomer und 0,4 bis 4 Gewichtsprozent Polyvinylpyrrolidon, basiert auf dem Gesamtgewicht der Elastomere in dem RFL-Klebstoff, umfasst.

2. Reifen nach Anspruch 1, wobei der RFL-Klebstoff 0,7 bis 2,5 Gewichtsprozent Polyvinylpyrrolidon, basiert auf dem Gesamtgewicht der Elastomere in dem RFL-Klebstoff, umfasst.

3. Reifen nach Anspruch 1 oder 2, wobei das mindestens eine andere Elastomer aus der aus Styrol-Butadien-Copolymer und Vinylpyridin-Styrol-Butadien-Terpolymer bestehenden Gruppe ausgewählt ist.

4. Reifen nach mindestens einem der vorgenannten Ansprüche, wobei der RFL-Klebstoff weiter ein Resorcinol-Formaldehydharz, ein Styrol-Butadien-Copolymer, ein Vinylpyridin-Styrol-Butadien-Terpolymer und ein blockiertes Isocyanat umfasst.

5. Reifen nach mindestens einem der vorgenannten Ansprüche, wobei die Textilkorde weiter ein an der Oberfläche der Textilkorde angebrachtes Polyepoxid umfassen.

6. Reifen nach mindestens einem der vorgenannten Ansprüche, wobei die Textilkorde aus der aus Polyesterkorden, Aramidkorden, Nylonkorden und hybriden Aramid-/Nylonkorden bestehenden Gruppe ausgewählt sind.

7. Reifen nach Anspruch 6, wobei die Textilkorde Polyesterkorde sind.

8. Reifen nach Anspruch 6, wobei die Textilkorde Aramidkorde sind.

9. Reifen nach Anspruch 6, wobei die Textilkorde hybride Korde sind, die um Nylongarne herumgewickelte Aramidgarne umfassen.

10. Reifen nach Anspruch 6, wobei die Textilkorde Nylonkorde sind.

11. Reifen nach mindestens einem der vorgenannten Ansprüche, wobei das mindestens eine Bauteil aus der aus Karkassenlagen, Laufstreifenoberteillagen, Wulsteinsätzen und Seitenwandeinsätzen bestehenden Gruppe ausgewählt ist.

12. Resorcinol-Formaldehyd-Latex (RFL)-Klebstoff, umfassend mindestens ein anderes Elastomer und 0,4 bis 4 Gewichtsprozent Polyvinylpyrrolidon, basiert auf dem Gesamtgewicht der Elastomere in dem RFL-Klebstoff.

13. Resorcinol-Formaldehyd-Latex (RFL)-Klebstoff nach Anspruch 12, umfassend 0,7 bis 2,5 Gewichtsprozent Polyvinylpyrrolidon, basiert auf dem Gesamtgewicht des Elastomers in dem RFL-Klebstoff.

14. RFL-Klebstoff nach Anspruch 12 oder 13, wobei das mindestens eine andere Elastomer aus der aus Styrol-Butadien-Copolymer und Vinylpyridin-Styrol-Butadien-Terpolymer bestehenden Gruppe ausgewählt ist.

15. Textilkord, umfassend einen an der Oberfläche der Textilkorde angebrachten RFL-Klebstoff nach einem der Ansprüche 12-14.

## Revendications

1. Bandage pneumatique comprenant au moins un composant, ledit au moins un composant comprenant une composition de caoutchouc qui entre en contact avec un ou plusieurs câblés de renforcement en textile, les câblés textiles comprenant un adhésif de résorcinol-formaldéhyde-latex (RFL) disposé sur la surface des câblés en textile, l'adhésif RFL comprenant au moins un autre élastomère et de la polyvinylpyrrolidone à concurrence de 0,4 à 4 % en poids basés sur le poids total des élastomères dans l'adhésif RFL.

2. Bandage pneumatique selon la revendication 1, dans lequel l'adhésif RFL comprend de la polyvinylpyrrolidone à concurrence de 0,7 à 2,5 % en poids, basés sur le poids total des élastomères dans l'adhésif RFL.

3. Bandage pneumatique selon la revendication 1 ou 2, dans lequel ledit au moins un autre élastomère est choisi parmi le groupe constitué par un copolymère de styrène-butadiène et un terpolymère de vinylpyridine-styrène-butadiène.

4. Bandage pneumatique selon au moins une des revendications précédentes, dans lequel l'adhésif RFL comprend en outre une résine de résorcinol-formaldéhyde, un copolymère de styrène-butadiène, un terpolymère de vinylpyridine-styrène-butadiène et un isocyanate bloqué.

5. Bandage pneumatique selon au moins une des revendications précédentes, dans lequel les câblés en textile comprennent en outre un polyépoxyde disposé à la surface des câblés en textile.

6. Bandage pneumatique selon au moins une des revendications précédentes, dans lequel les câblés en textile sont choisis parmi le groupe constitué par des câblés de polyester, des câblés d'aramide, des câblés de nylon et des câblés hybrides d'aramide/nylon.

7. Bandage pneumatique selon la revendication 6, dans lequel les câblés en textile sont des câblés de polyester.

8. Bandage pneumatique selon la revendication 6, dans lequel les câblés en textile sont des câblés d'aramide.

9. Bandage pneumatique selon la revendication 6, dans lequel les câblés en textile sont des câblés hybrides comprenant des câblés d'aramide entourant des câblés de nylon.

10. Bandage pneumatique selon la revendication 6, dans lequel les câblés en textile sont des câblés de nylon.

11. Bandage pneumatique selon au moins une des revendications précédentes, dans lequel ledit au moins un composant est choisi parmi le groupe constitué par des nappes de carcasse, des nappes de recouvrement, des inserts de talons et des inserts des flancs.

12. Adhésif de résorcinol-formaldéhyde-latex (RFL) comprenant au moins un autre élastomère et de la polyvinylpyrrolidone à concurrence de 0,4 à 4 % en poids basés sur le poids total des élastomères dans l'adhésif RFL.

13. Adhésif de résorcinol-formaldéhyde-latex (RFL) selon la revendication 12, comprenant de la polyvinylpyrrolidone à concurrence de 0,7 à 2,5 % en poids basés sur le poids total des élastomères dans l'adhésif RFL.

14. Adhésif RFL selon la revendication 12 ou 13, dans lequel ledit au moins un autre élastomère est choisi parmi le groupe constitué par un copolymère de styrène-butadiène et un terpolymère de vinylpyridine-styrène-butadiène.

15. Câblé en textile comprenant un adhésif RFL selon l'une quelconque des revendications 11 à 14, disposé à la surface des câblés en textile.
